# EUROPÄISCHE PATENTSCHRIFT

(11) **EP 3 526 370 B1**
(45) Veröffentlichungstag und Bekanntmachung des Hinweises auf die Patenterteilung: **07.04.2021**
(21) Anmeldenummer: 17765154.4
(22) Anmeldetag: 07.09.2017
(51) Int. Cl.: C25B 1/00, C25B 1/04, C25B 9/08, C25B 15/08

(54) **PHOTOELEKTROCHEMISCHE ZELLE ZUR LICHTINDUZIERTEN WASSERSPALTUNG**
PHOTOELECTROCHEMICAL CELL FOR LIGHT DRIVEN WATER SPLITTING
CELLULE PHOTOELECTROCHIMIQUE POUR ÉLECTROLYSE DE L'EAU

(30) Priorität: 14.10.2016 DE 102016119634
(43) Veröffentlichungstag der Anmeldung: 21.08.2019
(73) Patentinhaber: Technische Universität Ilmenau, 98683 Ilmenau (DE)
(72) Erfinder: MAY, Matthias, 14467 Potsdam (DE); HANNAPPEL, Thomas, 10779 Berlin (DE); LEWERENZ, Hans-Joachim, 14542 Werder/Havel (DE)
(74) Vertreter: SR Huebner - Munich Patent-und RechtsanwaltsPartG mbB
(86) Internationale Anmeldenummer: PCT/EP2017/072444
(87) Internationale Veröffentlichungsnummer: WO 2018/068953

(56) Entgegenhaltungen:
- US-A1- 2016 108 527

## Beschreibung

### Gebiet der Erfindung

Die Erfindung betrifft eine photoelektrochemische Zelle mit einem transparenten Abdeckelement, das an einer Oberseite der Zelle angeordnet ist, einem unterhalb des Abdeckelements angeordneten Innenraum, der teilweise mit einem Elektrolyten befüllt ist, und einem im oder am Elektrolyten angeordneten Halbleiterabsorber.

### Hintergrund der Erfindung

In der US-Patentanmeldung US 2016/0108527 A1 ist eine fotoelektrochemische Reaktionsvorrichtung beschrieben. Die Reaktionsvorrichtung umfasst einen Lösungsbehälter mit einer ersten Lösung, eine in dem Lösungsbehälter angeordneten Schichtstruktur mit einer ersten Elektrode, einer unter der ersten Elektrode ausgebildeten zweiten Elektrode, einer zwischen der ersten und zweiten Elektrode ausgebildeten fotovoltaischen Schicht, die dazu ausgelegt ist, eine Ladungstrennung durch das von oben einfallende Licht durchzuführen, und einer ersten Isolierschicht, die auf einer exponierten Oberfläche der zweiten Elektrode angebracht ist. Darüber hinaus umfasst die fotoelektrochemische Reaktionsvorrichtung eine in dem Lösungsbehälter oberhalb der ersten Elektrode angeordnete Röhre, die eine zweite Lösung enthält und Poren aufweist, die sich von der äußeren Oberfläche zur inneren Oberfläche erstrecken, sowie Leitungen, die die zweite Elektrode und die Röhre elektrisch verbinden.

In der internationalen Patentanmeldung WO 2015/002093 A1 wird ein fotoelektrochemischer Reaktor beschrieben. Der fotoelektrochemische Reaktor umfasst einen Lösungsbehälter für eine erste Lösung, eine in dem Lösungsbehälter angeordnete Schichtstruktur mit einer ersten Elektrode, einer unter der ersten Elektrode ausgebildeten zweiten Elektrode und einer zwischen der ersten und der zweiten Elektrode ausgebildeten fotovoltaischen Schicht, die dazu ausgelegt ist, eine Ladungstrennung mittels optischer Energie durchzuführen, und eine erste Isolierschicht, die auf der exponierten Oberfläche der zweiten Elektrode ausgebildet ist. Darüber hinaus umfasst der fotoelektrochemische Reaktor in dem Lösungsbehälter angeordnete Röhren, die gegenüber der ersten Elektrode angeordnet sind, eine zweite Lösung enthalten und Löcher aufweisen, die sich von der äußeren Oberfläche zur inneren Oberfläche der Röhren erstrecken, sowie elektrische Leitungen, die die zweite Elektrode mit den Röhren verbinden.

In der koreanischen Patenschrift KR 101349340 B1 wird eine Vorrichtung zur Wasserspaltung beschrieben. Die Vorrichtung zur Wasserspaltung umfasst eine oder mehrere Röhren zum Erzeugen und Abführen von Wasserstoff

US 2016/108527 A1 1 offenbart mehrere alternative fotoelektrochemische Reaktionsvorrichtungen. Die erste Ausführungsform weist mehrere Gegenelektroden (62) innerhalb von Membranhüllen (63) auf, die oberhalb eines Halbleiterabsorbers (31) und unterhalb eines Abdeckelements entlang laufen. Die Gase sind durch diese Konstruktion getrennt: CO bleibt in der Membranhülle, während O2 außerhalb derselben bleibt. In der achten Ausführungsform offenbart D1 eine andere fotoelektrochemische Reaktionsvorrichtung (ein Lösungsbehälter wird mit einer Kette von flachen Membranen (21a) und photoelektrochemischen Schichten (41) geteilt), dessen transparentes Abdeckelement (71) Kanalräume (131) aufweist, die als Lichtreflektoren und als Gasabführungsgassen dienen.

### Der Erfindung zugrundeliegende Aufgabe

Mithin liegt der Erfindung die Aufgabe zugrunde, eine Zelle für die Wasserspaltung zur Verfügung zu stellen, die eine verbesserte Abführung der erzeugten Gase ermöglicht und einen höheren Wirkungsgrad als bisherige Zellen aufweist.

### Erfindungsgemäße Lösung

Die Lösung der gestellten Aufgabe gelingt durch Bereitstellen einer Zelle, welche ein transparentes Abdeckelement, das an einer Oberseite der Zelle angeordnet ist, einen unterhalb des Abdeckelements angeordneten Innenraum, der teilweise mit einem Elektrolyten befüllt ist, und einen im oder am Elektrolyten angeordneten Halbleiterabsorber umfasst. Darüber hinaus umfasst die Zelle eine oder mehrere Gegenelektroden, die oberhalb des Halbleiterabsorbers im Elektrolyten angeordnet sind und mit einer an einer vom Abdeckelement abgewandten Rückseite des Halbleiterabsorbers angeordneten rückwärtigen Elektrode elektrisch verbunden sind, sowie eine oder mehrere Membranhüllen, wobei innerhalb einer Membranhülle jeweils eine Gegenelektrode verläuft. Zwischen einer Elektrolytoberfläche und einer Unterseite des Abdeckelements sind ein oder mehrere Kanalräume ausgebildet, die sich entlang von einem oder mehreren Teilbereichen der Unterseite des Abdeckelements erstrecken und zum Abführen eines im Innenraum der Zelle gebildeten ersten Gases nutzbar sind, wobei die Unterseite des Abdeckelements mindestens einen Bereich aufweist, an dem die Unterseite des Abdeckelements mit dem Elektrolyten in Kontakt steht, wobei zumindest ein Abschnitt dieses mindestens einen Bereichs eine Anlauffläche für Gasblasen bildet, welche dazu ausgelegt ist, die Gasblasen entlang einer gekrümmten oder schräg geneigten Oberfläche zu einem benachbarten Kanalraum zu leiten.

Bei der erfindungsgemäßen Zelle wird durch den mindestens einen Kanalraum, der zwischen der Elektrolytoberfläche und der Unterseite des Abdeckelements verläuft, eine effiziente Abführung des im Innenraum der Zelle, beispielsweise am Halbleiterabsorber gebildeten ersten Gases ermöglicht. Die im unteren Bereich der Zelle entstehenden Gasblasen steigen im Elektrolyten bedingt durch den Auftrieb nach oben zum Abdeckelement und werden von dort zu den Kanalräumen gelenkt, in denen sich das Gas sammelt und abgeführt werden kann. Dabei sind die ein oder mehreren Kanalräume Teil des Innenraums der Zelle. Im Kontext der vorliegenden Erfindung beziehen sich Ausdrücke wie "oben", "unten", "oberhalb", "unterhalb", "Oberseite" etc. auf die durch den Auftrieb der Gasblasen und somit letztlich durch die Schwerkraft vorgegebene Richtung, bei der die Gasblasen vom unten gelegenen Halbleiterabsorber zur oben gelegenen Absorberschicht aufsteigen. In dieser Hinsicht ist das Abdeckelement oben angeordnet und der Elektrolyt mit den darin befindlichen Halbleiterabsorber ist unterhalb des Abdeckelements angeordnet.

Durch die Kanalräume wird eine effiziente Abführung des ersten Gases ermöglicht. Dadurch können innerhalb des Elektrolyten vorhandene Gasblasen zügig abgeführt und damit aus dem Elektrolyten entfernt werden, sodass die Lichtstreuung innerhalb des Elektrolyten verringert wird. Folglich gelangt mehr Licht zum Halbleiterabsorber und die Zelle arbeitet insgesamt effizienter, sodass der Wirkungsgrad verbessert wird. Ein weiterer Vorteil ist, dass durch die Integration der Kanalräume in die Unterseite des Abdeckelements eine kompakte und platzsparende Ausgestaltung der Zelle ermöglicht wird. Dadurch ist es möglich, die Zelle insgesamt niedriger zu bauen und in Folge der verringerten Bauhöhe wird auch die vom Licht zu durchdringende Strecke im Elektrolyten verringert, sodass die Lichtausbeute und damit der Wirkungsgrad verbessert werden. Die für die Ausbildung der Kanalräume erforderlichen Ausnehmungen lassen sich fertigungstechnisch einfach realisieren. Bei der erfindungsgemäßen Zelle sind die Gegenelektroden und die diese umschließenden Membranhüllen ebenfalls oberhalb des Halbleiterabsorbers angebracht, wobei die Membranhüllen, die zumindest abschnittsweise in Form einer Membran ausgebildet sind, eine effiziente Abführung des zweiten Gases ermöglichen. Durch die erfindungsgemäße Zelle wird eine effiziente Abführung beider entstehender Gase ermöglicht. Die Verbesserungen im Wirkungsgrad durch die verkürzten Licht- und lonentransportwege können insbesondere dazu genutzt werden, einen Elektrolyten zu verwenden, der beispielsweise in Bezug auf seinen pH-Wert weniger starken Restriktionen als bisher unterliegt. Auf diese Weise ist es möglich, einen weniger aggressiven Elektrolyten zu verwenden, wodurch die Haltbarkeit der Zelle verbessert wird und sich die Materialauswahl bezüglich des Halbleiters und der Katalysatoren erhöht.

Eine erfindungsgemäße Zelle umfasst ein transparentes Abdeckelement, das an einer Oberseite der Zelle angeordnet ist, einen unterhalb des Abdeckelements angeordneten Innenraum, der teilweise mit einem Elektrolyten befüllt ist, und einen Halbleiterabsorber, der im oder am Elektrolyten angeordnet ist. Darüber hinaus umfasst die Zelle eine oder mehrere Gegenelektroden, die oberhalb des Halbleiterabsorbers im Elektrolyten angeordnet sind und mit einer an einer vom Abdeckelement abgewandten Rückseite des Halbleiterabsorbers angeordneten rückwärtigen Elektrode elektrisch verbunden sind, und eine oder mehrere Membranhüllen, wobei innerhalb einer Membranhülle jeweils eine Gegenelektrode verläuft. Die mindestens eine Membranhülle ist innerhalb der Zelle so angeordnet, dass nur ein Teil der Membranhülle innerhalb des Elektrolyten angeordnet ist, wobei eine Elektrolytoberfläche durch die mindestens eine Membranhülle hindurch verläuft.

Durch die teilweise oberhalb der Elektrolytoberfläche angeordnete Membranhülle wird oberhalb des Elektrolyten in der Membranhülle ein Freiraum bereitgestellt, der für die Gasabfuhr benutzt werden kann. Darüber hinaus ist es möglich, die Zelle kompakter zu bauen, weil die Gegenelektrode mit der Membranhülle weiter oben angeordnet wird. Wenn die Membranhülle beispielsweise unterhalb eines Kanalraums angeordnet wird, kann sich der obere Bereich der Membranhülle in den Kanalraum erstrecken. In Folge dieses kompakteren Aufbaus kann die Höhe des elektrolytbefüllten Bereichs und damit auch die Bauhöhe der Zelle verringert werden, sodass die Lichtwege verringert und die Lichtausbeute und damit der Wirkungsgrad der Zelle verbessert werden. Darüber hinaus ist für die Ausbildung der Membranhüllen weniger Membranmaterial erforderlich.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche.

Vorzugsweise sind die Gegenelektroden und die die Gegenelektroden umgebenden Membranhüllen im Bereich zwischen dem Halbleiterabsorber und dem transparenten Abdeckelement angeordnet. Die Gegenelektroden und die Membranhüllen sind also in dem Bereich oberhalb des Halbleiterabsorbers verlagert, die Gegenelektroden stehen aber über eine elektrische Leitung mit der an der Rückseite des Halbleiterabsorbers angeordneten rückwärtigen Elektrode in Verbindung. Auf diese Weise ergibt sich ein kompakter und platzsparender Aufbau der Zelle, da sämtliche Elektroden und Strukturelemente in dem Bereich oberhalb des Halbleiterabsorbers angeordnet sind.

Vorzugsweise sind die Gegenelektroden als in Längsrichtung verlaufende Längselektroden ausgebildet. Während das erste Gas an der Oberseite des Halbleiterabsorbers gebildet wird, findet an den Gegenelektroden die Erzeugung des zweiten Gases statt, also beispielsweise von Wasserstoff oder Sauerstoff. Zur Erzielung eines ausreichenden Wirkungsgrades ist es vorteilhaft, wenn durch die Gegenelektroden eine ausreichende Reaktionsfläche zur Verfügung gestellt wird. Es ist daher vorteilhaft, die Gegenelektroden als sich in Längsrichtung durch die Zelle hindurch erstreckende Längselektroden auszubilden. Dadurch wird die zur Gaserzeugung benötigte Reaktionsfläche bereitgestellt.

Vorzugsweise sind die Membranhüllen als die Gegenelektroden umgebende Membranröhren ausgebildet. Die Gegenelektroden verlaufen im Inneren der Membranröhren und werden von den Membranröhren umschlossen. Die Membranröhren erstrecken sich entlang des Verlaufs der Gegenelektroden, wobei an den Gegenelektroden gebildetes Gas innerhalb der Membranröhren gesammelt wird. Durch die Membranröhren werden die an den verschiedenen Elektroden entstehenden Gase voneinander ferngehalten, sodass die Entstehung explosiver Gasmischungen verhindert wird, während gleichzeitig der Transport von Ionen sichergestellt ist.

Vorzugsweise erstrecken sich die Membranhüllen zumindest teilweise innerhalb des Elektrolyten durch die Zelle hindurch. Während die Gegenelektroden vollständig im Elektrolyten angeordnet sind, können die Gegenelektroden umschließenden Membranhüllen entweder vollständig oder nur teilweise innerhalb des Elektrolyten angeordnet sein.

Vorzugsweise ist der mindestens eine Kanalraum in Form von mindestens einer an der Unterseite des Abdeckelements verlaufenden Ausnehmung ausgebildet. Wenn die benötigten Gasabführkanäle für das erste Gas in Form von Ausnehmungen an der Unterseite des Abdeckelements realisiert werden, hat dies den Vorteil, dass die Transportwege für die Abführung der Gasbläschen gering sind. Darüber hinaus lassen sich die Ausnehmungen im Abdeckelement auf einfache Weise fertigen.

Vorzugsweise ist der mindestens eine Kanalraum nicht mit Elektrolyt gefüllt. Vorzugsweise ist der Kanalraum zur Elektrolytoberfläche hin offen, sodass Gasbläschen aus dem Elektrolyten in den freien Kanalraum eindringen können, wobei die Gasabführung über den Kanalraum erfolgt.

Vorzugsweise wird das erste Gas am Halbleiterabsorber gebildet. Das erste Gas wird am Halbleiterabsorber in Form von Gasbläschen gebildet, welche vom Halbleiterabsorber nach oben zum Abdeckelement hin aufsteigen. Dort kann das erste Gas über die ein oder mehreren Kanalräume abgeführt werden.

Vorzugsweise ist die Zelle für eine lichtinduzierte Wasserspaltung ausgelegt. Beispielsweise kann die Zelle zur direkten solaren Wasserspaltung eingesetzt werden, wobei durch das auf die Zelle einfallende Sonnenlicht Wasser in Wasserstoff und Sauerstoff gespalten wird.

Vorzugsweise weist der Halbleiterabsorber auf der dem Abdeckelement zugewandten Seite eine katalytisch aktive Schicht auf. Dabei gelangt das einfallende Licht über das transparente Absorberelement und den Elektrolyten zur katalytisch aktiven Schicht an der Oberseite des Halbleiterabsorbers. Bei der katalytisch aktiven Schicht kann es sich um eine Kathode oder um eine Anode handeln.

Vorzugsweise sind die Gegenelektroden und die Gegenelektroden umgebenden Membranhülle jeweils unter den Kanalräumen angeordnet. Weiter vorzugsweise sind die Gegenelektroden und die Gegenelektroden umgebenden Membranhüllen jeweils unmittelbar unter den Kanalräumen angeordnet. Die Kanalräume dienen zur Abführung des ersten Gases, das an der Oberseite des Halbleiterabsorbers gebildet wird und über den Elektrolyten zu den Kanalräumen gelangt. Dagegen wird an den darunter angeordneten Gegenelektroden innerhalb der die Gegenelektroden umgebenden Membranhüllen das zweite Gas erzeugt. Vorzugsweise sind die Membranhüllen als Membranröhren ausgebildet, welche die Gegenelektroden umschließen und über die das zweite Gas abgeführt werden kann. Es ergibt sich daher eine Anordnung, bei der über die Kanalräume das erste Gas und über die darunter befindlichen Membranhüllen beziehungsweise Membranröhren das zweite Gas abgeführt wird. Durch diese räumlich koinzidierende Übereinanderanordnung der beiden Gasabführungen wird insbesondere erreicht, dass der Lichteinfall am Abdeckelement nicht unnötig verschattet wird, sodass die am Halbleiterabsorber eintreffende Lichtmenge nicht unnötig beeinträchtigt wird. Indem die zur Gasabführung benötigten Strukturelemente untereinander angeordnet werden und beide Gasabführungen auf diese Weise räumlich kompakt realisiert werden, wird erreicht, dass der restliche Bereich der Zelle für die Verarbeitung des einfallenden Lichts zur Verfügung steht. Dadurch kann eine Zelle mit hohem Wirkungsgrad realisiert werden. Darüber hinaus ergibt sich durch die Übereinanderanordnung der Kanalräume und der Membranhüllen beziehungsweise Membranröhren eine platzsparende und kompakte Auslegung der Zelle, was wiederum zur Optimierung der Transportwege innerhalb der Zelle beiträgt.

Vorzugsweise sind an dem Abdeckelement ein oder mehrere Verbindungsstege angebracht, mit denen die Gegenelektrode und die die Gegenelektrode umgebende Membranhülle in einer Position unter einem zugeordneten Kanalraum gehalten werden. Die Membranhüllen und die Gegenelektroden werden unmittelbar am Abdeckelement befestigt, sodass sämtliche Strukturmerkmale für die Gasabführung in das Abdeckelement integriert werden. Das Abdeckelement stellt somit ein Deckelelement dar, in dem ein Großteil der für den Betrieb der Zelle erforderlichen Strukturen integriert ist. Das Deckelelement muss dann lediglich auf den mit Elektrolyt befüllten Unterteil der Zelle mit dem Halbleiterabsorber aufgesetzt werden, um eine funktionsfähige Zelle zu erhalten.

Vorzugsweise sind die Kanalräume über den Gegenelektroden und den die Gegenelektroden umgebenden Membranhüllen angeordnet, so dass ein Lichteinfall durch das Abdeckelement hindurch auf den Halbleiterabsorber geringstmöglich verschattet ist. Würde man die Membranhüllen neben den Kanalräumen anordnen, wäre die Verschattung des Lichteinfalls deutlich größer.

Vorzugsweise folgen die an der Unterseite der Abdeckstruktur angeordneten Kanalräume dem Verlauf der Gegenelektroden und der Membranhüllen. Auf diese Weise erhält man einen sich überdeckenden Verlauf der Kanalräume und der darunter angeordneten Membranhüllen. Vorzugsweise erstrecken sich sowohl die Membranhüllen als auch die darüber befindlichen Kanalräume in Längsrichtung durch die Zelle.

Vorzugsweise überdecken sich von der Oberseite des Abdeckelements aus betrachtet die Kanalräume, die Gegenelektroden und die diese umschließenden Membranhüllen zumindest weitgehend.

Vorzugsweise verlaufen die Kanalräume oberhalb und im Wesentlichen parallel zu den Gegenelektroden und den diese umschließenden Membranhüllen. Weiter vorzugsweise verlaufen die Kanalräume, die Gegenelektroden und die Membranhüllen parallel zueinander in Längsrichtung.

Vorzugsweise ist über die Membranhüllen ein an den Gegenelektroden entstehendes zweites Gas abführbar. Dazu ist die Membranhülle vorzugsweise als die Gegenelektrode umschließende Membranröhre ausgebildet, welche einen Abtransport des an der Gegenelektrode entstehenden zweiten Gases ermöglicht.

Vorzugsweise handelt es sich bei dem ersten Gas um Wasserstoff und bei dem zweiten Gas um Sauerstoff. Alternativ dazu kann es sich bei dem ersten Gas um Sauerstoff und bei dem zweiten Gas um Wasserstoff handeln.

Vorzugsweise sind zwischen der Elektrolytoberfläche und der Unterseite des Abdeckelements mehrere in regelmäßigen Abständen zueinander angeordnete Kanalräume ausgebildet. Dadurch können die Transportwege für die Gasblasen gering gehalten werden, sodass die Gasblasen zügig aus dem Elektrolyten in die Kanalräume übertreten. Dadurch wird die Lichtstreuung innerhalb des Elektrolyten vermindert, was wiederum den Wirkungsgrad erhöht.

Vorzugsweise weist die Unterseite des Abdeckelements mindestens einen Bereich auf, an dem die Unterseite des Abdeckelements mit dem Elektrolyten in Kontakt steht. Vorzugsweise weist die Unterseite des Abdeckelements mindestens einen Bereich zwischen benachbarten Kanalräumen auf, an dem die Unterseite des Abdeckelements mit dem Elektrolyten in Kontakt steht. Im Bereich der Kanalräume steht das Abdeckelement nicht mit dem Elektrolyten in Kontakt, denn hier befindet sich zwischen der Elektrolytoberfläche und dem Abdeckelement ein Zwischenraum. In dem mindestens einen Bereich zwischen den Kanalräumen ist es jedoch von Vorteil, wenn der Elektrolyt in unmittelbarem Kontakt mit der Unterseite des Abdeckelements steht, weil sich in diesem Fall eine gute Lichttransmission ergibt.

Die Unterseite des Abdeckelements weist mindestens einen Bereich auf, an dem die Unterseite des Abdeckelements mit dem Elektrolyten in Kontakt steht, wobei zumindest ein Abschnitt dieses mindestens einen Bereichs eine Anlauffläche für Gasblasen bildet. Die Unterseite des Abdeckelements weist mindestens einen Bereich auf, an dem die Unterseite des Abdeckelements mit dem Elektrolyten in Kontakt steht, wobei zumindest ein Abschnitt dieses mindestens einen Bereichs eine Anlauffläche für Gasblasen bildet, welche dazu ausgelegt ist, die Gasblasen entlang einer gekrümmten oder geneigten Oberfläche zu einem benachbarten Kanalraum zu leiten. Es wird vorgeschlagen, die ein oder mehreren Bereiche an der Unterseite des Abdeckelements, die sich zwischen den Kanalräumen befinden und die mit dem Elektrolyten in Kontakt stehen, jeweils als Anlauffläche für Gasblasen auszubilden. Diese Gasblasen steigen in Folge des Auftriebs nach oben zum Abdeckelement hin auf und treffen auf diese Anlauffläche, die vorzugsweise gekrümmt oder schräg geneigt ausgebildet ist, sodass die auftreffenden Gasbläschen entlang dieser Anlauffläche seitlich zum nächstgelegenen Kanalraum gelenkt werden. Über die Anlaufflächen werden die aufsteigenden Gasbläschen also zügig in die Kanalräume geleitet. Dadurch ist es möglich, die Gasbläschen schnell aus dem Elektrolyten zu entfernen, sodass die Lichtstreuung innerhalb des Elektrolyten vermindert wird, was wiederum den Wirkungsgrad der Zelle verbessert.

Vorzugsweise sind zumindest Teilbereiche der Kanalräume mit einer hydrophoben Beschichtung versehen oder mittels einer hydrophobierenden Oberflächenbehandlung modifiziert. Auf diese Weise wird verhindert, dass die Wandungen der Kanalräume mit Elektrolyt benetzt werden, so dass die Kanalräume für die Gasabführung freigehalten werden.

Vorzugsweise sind zumindest Teilbereiche der mit dem Elektrolyten in Kontakt stehenden Bereiche der Unterseite des Abdeckelements mit einer hydrophilen Beschichtung versehen oder mittels einer hydrophilierenden Oberflächenbehandlung modifiziert. Durch die Hydrophilierung wird eine gute Benetzung der Unterseite des Abdeckelements mit Elektrolyt erzielt. Dadurch kann die Anhaftung von Gasblasen an der Wandung verringert werden.

Vorzugsweise sind die Anlaufflächen für Gasblasen an der Unterseite des Abdeckelements mit einer hydrophilen Beschichtung versehen oder mittels einer hydrophilierenden Oberflächenbehandlung modifiziert. Dadurch wird gerade an den Anlaufflächen eine gute Benetzung mit Elektrolyt erzielt, sodass die Anhaftung von Gasblasen verringert wird. Die Gasblasen haften daher nicht an und werden zügig zur Seite zu den Kanalräumen hin abgeleitet.

Vorzugsweise besteht das transparente Abdeckelement aus einem von folgenden: Glas, Quarzglas, transparenter Kunststoff. Vorzugsweise besteht die mindestens eine Membranhülle zumindest abschnittsweise aus einer protonenleitenden Membran.

Vorzugsweise ist in oder an dem Abdeckelement mindestens ein optisches Element angeordnet, das dazu ausgelegt ist, einfallendes Licht an dem mindestens einen Kanalraum vorbei zum Halbleiterabsorber zu lenken. Mithilfe des mindestens einen optischen Elements ist es möglich, im Bereich des Kanalraums einfallendes Licht, welches ohne entsprechende optische Elemente den Halbleiterabsorber nicht erreichen würde, zum Halbleiterabsorber hin umzulenken, wo dieses Licht für die Wasserspaltung nutzbar ist. Damit wird der Lichtabschattung durch die Gasabführungsstrukturen entgegengewirkt. Durch die Umlenkung von an sich nicht nutzbarem Licht hin zum Halbleiterabsorber wird die Lichtausbeute und damit der Wirkungsgrad der Zelle erhöht.

Vorzugsweise ist an oder in dem Abdeckelement mindestens ein optisches Element angeordnet, das dazu ausgelegt ist, einfallendes Licht an einem jeweils darunter angeordneten Kanalraum vorbei zum Halbleiterabsorber zu lenken. Vorzugsweise ist das jeweilige optische Element also unmittelbar oberhalb des jeweiligen Kanalraums angeordnet, sodass das an sich auf den Kanalraum auftreffende Licht durch das darüber angeordnete optische Element am Kanalraum vorbeigeführt werden kann. Vorzugsweise ist an oder in dem Abdeckelement mindestens ein optisches Element angeordnet, das dazu ausgelegt ist, einfallendes Licht an einem jeweils darunter angeordneten Kanalraum, einer jeweils unter dem Kanalraum angeordneten Gegenelektrode und einer die Gegenelektrode jeweils umgebenden Membranhülle vorbei zum Halbleiterabsorber zu lenken.

Vorzugsweise ist das mindestens eine optische Element oberhalb des mindestens einen Kanalraums angeordnet und deckt von der Oberseite der Zelle aus betrachtet die Kanalräume ab. Weiter vorzugsweise ist das mindestens eine optische Element von der Oberseite der Zelle aus betrachtet dem Verlauf der Kanalräume folgend angeordnet. Von der Zelle aus gesehen sind die optischen Elemente also über den Gasabführungsstrukturen angeordnet und folgen dem Verlauf dieser Strukturen, um dort auftreffendes Licht zum Halbleiterabsorber lenken zu können.

Vorzugsweise handelt es sich bei dem mindestens einen optischen Element um mindestens eines von folgenden: ein Prismenelement, ein Linsenelement, ein Fresnellinsenelement. Beispielsweise kann ein Prismenelement geeignete Grenzflächen zwischen Gas, Glas und Elektrolyt aufweisen, um eine gewünschte Umlenkung der eintreffenden Lichtenergie zu erzielen.

Vorzugsweise ist die mindestens eine Membranhülle innerhalb der Zelle so angeordnet, dass nur ein Teil der Membranhülle innerhalb des Elektrolyten angeordnet ist, wobei die Elektrolytoberfläche durch die mindestens eine Membranhülle hindurch verläuft. Indem die Membranhülle teilweise unterhalb und teilweise oberhalb der Elektrolytoberfläche verläuft, entsteht innerhalb der Membranhülle ein Freiraum, der zur Gasabführung genutzt werden kann. Ein weiterer Vorteil ist, dass die Membranhülle näher am Abdeckelement platziert werden kann, sodass die Zelle insgesamt dünner und damit kompakter gebaut werden kann. Durch diese bauliche Ausgestaltung wird der Lichtweg zwischen der Oberseite des Abdeckelements und dem Halbleiterabsorber verkürzt, sodass sich in Folge dieses verkürzten Lichtwegs ein verbesserter Wirkungsgrad der Zelle ergibt. Ein weiterer Vorteil ist, dass lediglich der im Elektrolyten verlaufende Bereich der Hülle beziehungsweise der Röhre in Form einer Membran ausgebildet sein muss, was zu einer entsprechenden Materialersparnis führt.

Vorzugsweise ist zumindest der im Elektrolyten verlaufende Bereich der Membranhülle als Membran ausgebildet. Weiter vorzugsweise ist der oberhalb der Elektrolytoberfläche angeordnete Bereich der Membranhülle für eine Abführung eines an der innerhalb der Membranhülle verlaufenden Gegenelektrode gebildeten zweiten Gases nutzbar. Bei dieser Lösung ist es beispielsweise möglich, dass sich der obere Teil der Membranhülle sich zum Teil in den darüber befindlichen Kanalraum erstreckt, sodass man eine besonders kompakte Struktur für die Abführung der beiden erzeugten Gase erhält.

Vorzugsweise ist der oberhalb der Elektrolytoberfläche angeordnete Bereich der Membranhülle durch ein sich in Längsrichtung erstreckendes Formteil gebildet, welches einen oberhalb der Elektrolytoberfläche verlaufenden Kanalbereich umschließt, der zum Transport eines an der Gegenelektrode entstehenden zweiten Gases ausgebildet ist.

Vorzugsweise handelt es sich bei dem Halbleiterabsorber um eine Tandemkonfiguration besteht aus zwei Halbleitern unterschiedlicher Bandlücken, wobei der Halbleiter mit der größeren Bandlücke über dem Halbleiter mit der kleineren Bandlücke angeordnet ist. Alternativ kann es sich auch um einen einzigen Halbleiter mit größerer Bandlücke oder um drei Halbleiter handeln.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
Figur 1: Fig. 1 zeigt eine schematische Ansicht einer Zelle zur Wasserspaltung.
Figur 2: Fig. 2 zeigt einen Querschnitt durch eine Zelle zur Wasserspaltung.
Figur 3: Fig. 3 zeigt eine Zelle zur Wasserspaltung mit einer verbesserten Abführung der beiden in der Zelle erzeugten Gase;
Figur 4a: Fig. 4a einen Querschnitt durch die in Fig. 3 eingesetzte Membranröhrenstruktur.
Figur 4b: Fig. 4b zeigt eine weitere Möglichkeit zur Ausbildung der Membranröhren.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

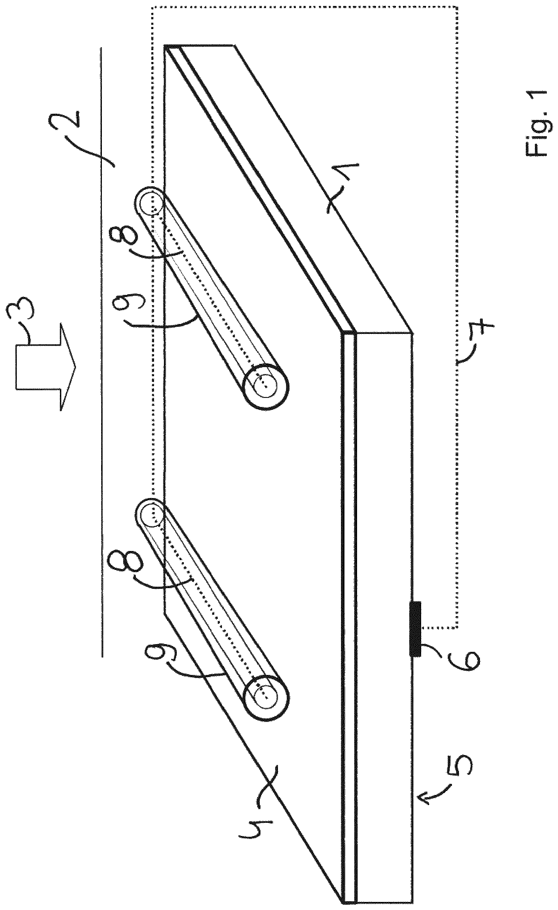

Figur 1 zeigt eine schematische Ansicht einer Zelle für die solare Wasserspaltung. Die Zelle umfasst einen Halbleiterabsorber 1, der in einem Elektrolyten 2 angeordnet ist. An der Oberseite des Halbleiterabsorbers 1 ist eine katalytisch aktive Schicht 4 angeordnet, die dem einfallenden Licht zugewandt ist. Auf der rückwärtigen Seite des Halbleiterabsorbers 1, welche nicht von Licht beschienen wird, ist eine rückwärtige Elektrode 5 angeordnet. Wenn Licht in Richtung des Pfeils 3 auf dem Halbleiterabsorber 1 auftrifft, wird innerhalb des Halbleiterabsorbers 1 eine Ladungstrennung hervorgerufen, wobei Ladungsträger einer ersten Polarität zur katalytisch aktiven Schicht 4 und Ladungsträger der entgegengesetzten Polarität zur rückwärtigen Elektrode 5 wandern. Bei der katalytisch aktiven Schicht 4 kann es sich beispielsweise um eine Kathode handeln, an der sich die durch den Lichteinfall erzeugten Elektronen sammeln. Bei der solaren Wasserspaltung findet an der Kathode die Reduktion von 2H⁺ zu elementarem Wasserstoff H₂ statt, also die Reaktion 2H⁺ + 2e⁻ → H₂. Diese an der Kathode stattfindende Erzeugung von elementarem Wasserstoff bezeichnet man auch als "Hydrogen Evolution Reaction" oder HER. Zur Verbesserung der Effizienz bei der Umsetzung von H⁺ zu elementarem Wasserstoff ist die Kathode vorzugsweise mit einem geeigneten Katalysator versehen, beispielsweise mit Platin (Pt) oder Rhodium (Rh). Dabei kann der Katalysator in Form der katalytisch aktiven Schicht 4 oder als Bestandteil der katalytisch aktiven Schicht 4 auf die Oberseite des Halbleiterabsorbers 1 aufgebracht sein, der Katalysator kann aber auch als Nanostrukturierung oder in Form von Nanopartikeln auf die Kathode aufgebracht werden. Durch den jeweiligen Katalysator wird die Aktivierungsenergie bei der Umsetzung von H⁺ zu H₂ abgesenkt.

Wenn die katalytisch aktive Schicht 4 an der dem Lichteinfall zugewandten Seite des Halbleiterabsorbers 1 als Kathode ausgebildet ist, ist die an der rückwärtigen, vom Licht abgewandten Seite des Halbleiterabsorbers 1 angeordnete rückwärtige Elektrode 5 als Anode ausgebildet. Die rückwärtige Elektrode 5 wird mittels eines ohmschen Kontakts 6 kontaktiert und über eine elektrische Leitung 7 mit einer Mehrzahl von Gegenelektroden 8 elektrisch verbunden, die auf der dem Licht zugewandten Seite des Halbleiterabsorbers 1 oberhalb der katalytisch aktiven Schicht 4 in Längsrichtung verlaufend angeordnet sind. Ebenso wie der Halbleiterabsorber 1 sind auch die Gegenelektroden 8 rundum von dem Elektrolyten 2 umgeben. Wenn die katalytisch aktive Schicht 4 als Kathode ausgebildet ist, sind die Gegenelektroden 8 als Gegenanoden ausgebildet, an denen die Sauerstofferzeugung stattfindet. Bei der Sauerstofferzeugung, welche auch als "Oxygen Evolution Reaction" beziehungsweise OER bezeichnet wird, wird das jeweilige Anion des Elektrolyten 2 unter Abgabe von Elektronen in elementaren Sauerstoff umgesetzt. Um die Effizienz der Sauerstofferzeugung zu verbessern, sind die Gegenanoden 8 mit einem geeigneten Katalysator versehen, der die Umsetzung des jeweiligen Anions zu elementarem Sauerstoff beschleunigt.

Wenn Licht in Richtung des Pfeils 3 von oben auf die Zelle zur Wasserstoffspaltung einfällt, dann entsteht an der katalytisch aktiven Schicht 4 elementarer Wasserstoff, wohingegen an den Gegenelektroden 8 elementarer Sauerstoff erzeugt wird. Um die Entstehung eines explosionsfähigen Gemischs aus Wasserstoff und Sauerstoff zu verhindern, ist es notwendig, die Sauerstofferzeugung räumlich von der Wasserstofferzeugung abzugrenzen. Bei der in Figur 1 gezeigten Lösung sind hierzu Membranröhren 9 vorgesehen, die die in Längsrichtung verlaufenden Gegenelektroden 8 in Form einer aus einem Membranmaterial bestehenden Röhre in einem gewissen Abstand von der innerhalb der Membranröhre angeordneten Gegenelektrode 8 umschließen. Dadurch wird die innerhalb der Membranröhren 9 stattfindende Sauerstofferzeugung räumlich von der an der katalytisch aktiven Schicht 4 stattfindenden Wasserstofferzeugung getrennt, so dass die entstehenden Sauerstoff- und Wasserstoffbläschen nicht miteinander in Kontakt kommen. Vorzugsweise wird innerhalb der Membranröhren 9 derselbe Elektrolyt verwendet wie außerhalb der Membranröhren 9. Es kann aber vorteilhaft sein, beispielsweise den Elektrolyten innerhalb der Membranröhren 9 oder den Elektrolyten in der restlichen Zelle selektiv mit Zusätzen zu versehen, die die Membran nicht passieren können. Beispielsweise könnte der Elektrolyt innerhalb der Membranröhren 9 oder der Elektrolyt in der restlichen Zelle selektiv mit Zusätzen versehen werden, die die Stabilität der Elektroden verbessern, oder mit einem Tensid, um die Blasenbildung zu steuern. Der Abtransport des innerhalb der Membranröhren 9 gebildeten Wasserstoffs kann dann über die Membranröhren 9 erfolgen. Als Material für die Membranröhren 9 wird vorzugsweise eine protonenleitende Membran verwendet, wie sie beispielsweise unter der Bezeichnung "Nafion" angeboten wird. Derartige Membranen sind für Protonen durchlässig, für elementaren Sauerstoff und Wasserstoff sowie für andere Ionen jedoch nicht.

Bei der bisherigen Diskussion war die katalytisch aktive Schicht 4 als Kathode und die Gegenelektroden 8 als Gegenanoden ausgebildet. Alternativ kann man jedoch die katalytisch aktive Schicht 4 auch als Anode ausbilden, an der dann die Sauerstofferzeugung, also die "Oxygen Evolution Reaction" stattfindet. In diesem Fall würden die Gegenelektroden 8 als Kathoden realisiert werden, an denen dementsprechend dann die Wasserstofferzeugung, also die "Hydrogen Evolution Reaction" stattfindet. Als Elektrolyten 2 kann man entweder einen Elektrolyten im saueren Milieu oder einen Elektrolyten im basischen Milieu wählen, wobei die konkrete Auswahl des Elektrolyten in Abhängigkeit von der jeweiligen Ausgestaltung des Halbleiterabsorbers 1 erfolgen sollte. Es besteht nämlich die Gefahr, dass die Oberfläche des Halbleiterabsorbers 1 und insbesondere die katalytisch aktive Schicht 4 durch den Elektrolyten 2 angegriffen und angeätzt werden. Wenn die katalytisch aktive Schicht 4 als Kathode ausgebildet ist, ist es vorteilhaft, einen Elektrolyten im sauren Milieu zu verwenden, beispielsweise Perchlorsäure. Als Katalysator für die Wasserstofferzeugung an der Kathode können wie oben beschrieben beispielsweise Platin (Pt) und Rhodium (Rh) verwendet werden. Als Katalysatoren für die Sauerstofferzeugung an der Gegenelektrode würde man dann Rutheniumoxid RuO₂, Iridiumoxid IrO₂ oder DSA (Dimensionally Stable Anodes), welche aus Titan und einem Ruthenium-Titan-Oxid bestehen, verwenden. Als effiziente Katalysatoren für die HER im sauren Elektrolyten wären beispielsweise NiMo, NiMoCo, NiW, NiMoFe, CoMo zu nennen. Für die HER im Basischen könnte man als Katalysatoren beispielsweise NiMo, CoMo, NiFe, NiMoFe, CoNiFe einsetzen. Für die OER im Basischen wären NiZn, CoP, CoFe, NiFe, NiSn, NiMoFe, NiNiFeCoCe als Katalysatoren geeignet.

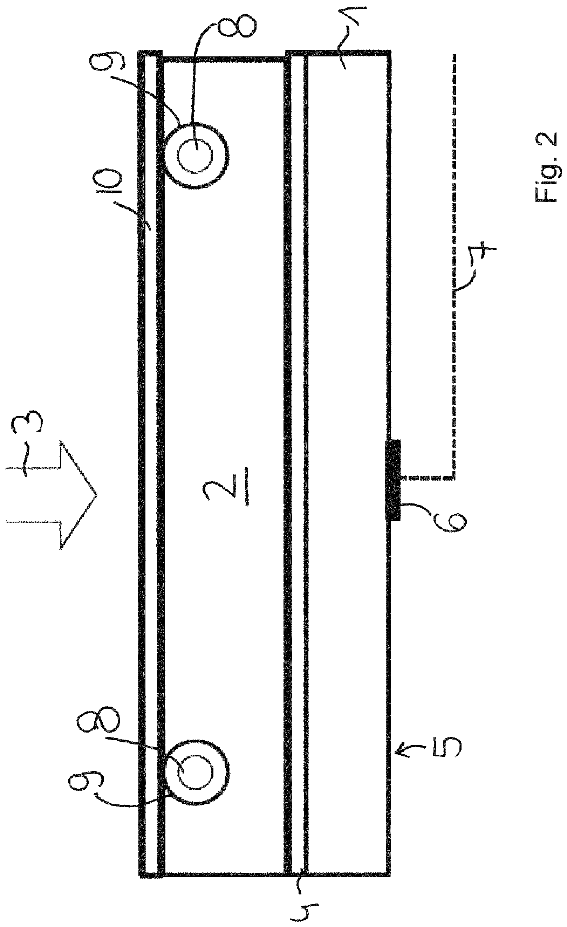

In Figur 2 ist ein Querschnitt durch die in Figur 1 schematisch gezeigte Zelle zur solaren Wasserspaltung gezeigt. Wieder ist der Halbleiterabsorber 1 mit der katalytisch aktiven Schicht 4 zu erkennen, der von dem Elektrolyten 2 umgeben ist. Die in Figur 2 gezeigte Zelle ist an der Oberseite durch eine Platte 10 aus Glas oder transparentem Kunststoff abgedeckt. Wenn einfallendes Licht in Richtung des Pfeils 3 durch die Platte 10 und den Elektrolyten 2 hindurch auf der katalytisch aktiven Schicht 4 auftrifft, die im vorliegenden Fall als Kathode realisiert ist, dann werden an der Kathode Bläschen von elementarem Wasserstoff erzeugt. An den Gegenelektroden 8, die über die elektrische Leitung 7 und den ohmschen Kontakt 6 mit der Rückseite des Halbleiterabsorbers 1 verbunden sind, beginnt die Erzeugung von Sauerstoffbläschen. Dabei sind die in Längsrichtung verlaufenden Gegenelektroden 8 jeweils von einem Membranschlauch 9 aus protonenleitendem Material umgeben. Der Transport von Ionen findet innerhalb des Elektrolyten 2 statt, wobei die Kationen zur katalytisch aktiven Schicht 4 des Halbleiterabsorbers 1 transportiert werden. Dabei setzt der Elektrolyt 2 dem lonentransport einen ohmschen Widerstand entgegen, der zu Verlusten führt. Zur Konstruktion einer effizient arbeitenden Zelle zur solaren Wasserspaltung ist es daher erforderlich, die lonentransportwege innerhalb des Elektrolyten gering zu halten. In dieser Hinsicht hat es sich bewährt, wenn der Abstand zwischen benachbarten Gegenelektroden im Bereich von ca. 0,5 cm bis 20 cm, weiter vorzugsweise zwischen ca. 1 cm bis 6 cm gewählt wird. In diesem Fall sind die Transportwege hinreichend gering, um ohmsche Verluste zu vermeiden.

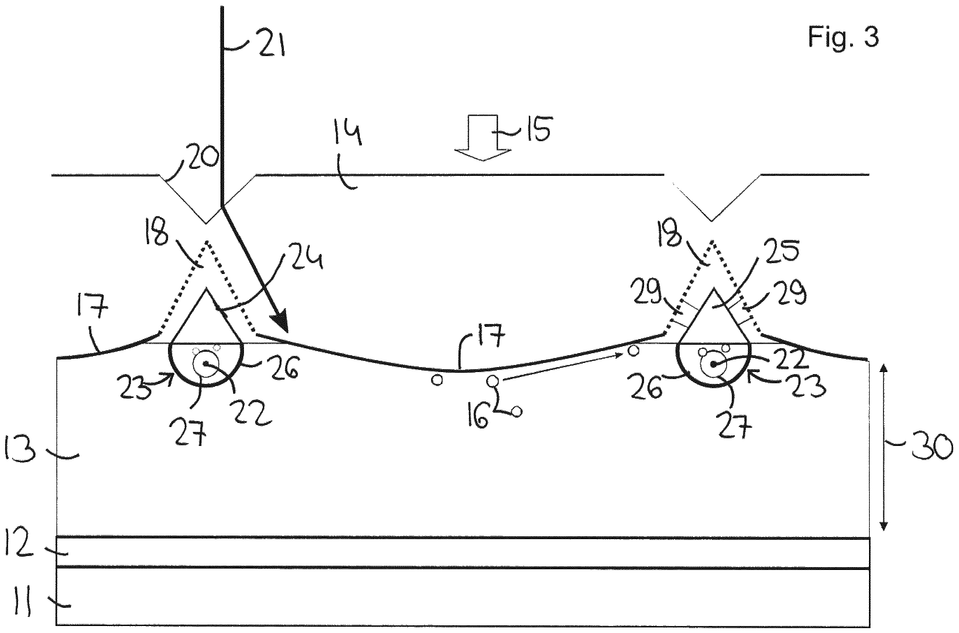

In Figur 3 ist ein Beispiel für eine Zelle für die solare Wasserspaltung entsprechend den Ausführungsformen der Erfindung dargestellt. Die Zelle umfasst einen Halbleiterabsorber 11 mit einer darauf aufgebrachten katalytisch aktiven Schicht 12, der von einem Elektrolyten 13 umgeben ist. Zur Lichteinfallsseite hin wird die Zelle durch ein transparentes Abdeckelement 14 begrenzt, das beispielsweise aus Glas, Quarzglas oder aus einem transparenten Kunststoff bestehen kann. Beispielsweise könnte das transparente Abdeckelement 14 aus Cyclo-Olefin-Copolymeren hergestellt werden, die unter dem Markennamen "Zeonor" vertrieben werden. Wenn auf die Oberseite der Zelle Licht in Richtung des Pfeils 15 eingestrahlt wird, durchdringt das Licht das transparente Abdeckelement 14 sowie den darunter befindlichen Elektrolyten und beaufschlagt den Halbleiterabsorber 11. Infolge der bei Lichteinstrahlung im Halbleiterabsorber 11 auftretenden Ladungstrennung werden an der katalytisch aktiven Schicht 12 Elektronen zur Verfügung gestellt, so dass an der katalytisch aktiven Schicht 12 die Umsetzung von H⁺-Ionen zu elementarem Wasserstoff beginnen kann. Die entstehenden Wasserstoffbläschen 16 steigen im Elektrolyten 13 infolge des Auftriebs nach oben und treffen auf die gewölbte beziehungsweise geneigte Anlauffläche 17 an der Unterseite des transparenten Abdeckelements 14, welche als Anlauffläche für die nach oben steigenden Wasserstoffbläschen 16 dient. Infolge der Neigung beziehungsweise Wölbung des Anlauffläche 17 und des auf die Wasserstoffbläschen 16 wirkenden Auftriebs werden die Wasserstoffbläschen 16 entlang der Unterseite des transparenten Abdeckelements 14 zu einem der Kanalräume 18 geführt, die an der Unterseite des transparenten Abdeckelements 14 in Längsrichtung senkrecht zur Blattebene verlaufen. Die Kanalräume 18 sind an der Unterseite des transparenten Abdeckelements 14 in Form von Ausnehmungen oder Aussparungen vorgesehen, die sich von der Unterseite des transparenten Abdeckelements 14 aus in das transparente Abdeckelement 14 hinein erstrecken.

Dabei sind die Kanalräume 18 nicht mit Elektrolyt befüllt. Der Innenraum der Zelle für die solare Wasserspaltung ist nämlich nicht vollständig, sondern lediglich teilweise mit dem Elektrolyten 13 befüllt. Der Innenraum der Zelle für die solare Wasserspaltung ist lediglich bis zu der in Figur 3 eingezeichneten Elektrolytoberfläche 19 mit dem Elektrolyten 13 befüllt, wohingegen der Bereich oberhalb der Elektrolytoberfläche 19 und insbesondere auch die Kanalräume 18 mit Luft oder mit einem Gas befüllt sind. Durch die nur teilweise Befüllung der Zelle mit dem Elektrolyten 13 wird erreicht, dass die Kanalräume 18 für den Abtransport des entstehenden Gases genutzt werden können.

Die infolge des Auftriebs nach oben steigenden Wasserstoffbläschen 16 folgen infolge ihres Auftriebs dem Verlauf der gekrümmten oder geneigten Anlauffläche 17 an der Unterseite des transparenten Abdeckelements 14 und werden so zu den Kanalräumen 18 geführt. Innerhalb der Kanalräume 18 sammelt sich der entstandene Wasserstoff am oberen Ende des Kanalraums 18 und kann über den Kanalraum 18 aus der Zelle für die solare Wasserspaltung ausgeleitet werden. Durch das Zusammenspiel der gekrümmten oder geneigten Anlaufflächen 17 mit den Kanalräumen 18 können die an der katalytisch aktiven Schicht 12 entstehenden Wasserstoffbläschen 16 effizient gesammelt und zu den Kanalräumen 18 geleitet werden. Dadurch können die im Elektrolyten 13 vorhandenen Gasbläschen schnell ausgeleitet werden, wodurch die durch die Gasbläschen verursachte Lichtstreuung innerhalb des Elektrolyten 13 verringert wird. Durch diese Verbesserung der Lichtdurchlässigkeit des Elektrolyten 13 kann das einfallende Licht besser als bisher für die Wasserspaltung genutzt werden, so dass eine Zelle mit verbessertem Wirkungsgrad erhalten wird.

Eine weitere Verbesserung des Wirkungsgrads der Zelle wird durch optische Elemente 20 erzielt, die an der Oberseite des transparenten Abdeckelements 14 angeordnet sind und dem Verlauf der darunter befindlichen Kanalräume 18 folgen. Insofern verlaufen sowohl die Kanalräume 18 als auch die darüber angeordneten optischen Elemente 20 übereinander in Längsrichtung des transparenten Abdeckelements 14. Wenn man das transparente Abdeckelement 14 von oben betrachtet, überdecken sich die optischen Elemente 20 in ihrem Verlauf die darunter befindlichen Kanalräume 18. Die Kanalräume 18 werden daher durch die darüber befindlichen optischen Elemente 20 abgeschattet beziehungsweise verdeckt. Die optischen Elemente 20 haben die Aufgabe, einfallendes Licht, das an sich auf Kanalraum 18 auftreffen würde und somit für die solare Wasserspaltung nicht nutzbar wäre, an den Kanalräumen 18 vorbei in den Elektrolyten 13 und zum Halbleiterabsorber 11 zu lenken. Hierzu können die optischen Elemente 20 beispielsweise als Prismenstrukturen, als Linsenelemente oder als Fresnellinsen ausgebildet sein. Bei dem in Figur 3 gezeigten Beispiel sind die optischen Elemente 20 als Prismen ausgebildet, welche einen einfallenden Lichtstrahl 21 an dem darunter befindlichen Kanalraum 18 vorbei in den Elektrolyten 13 der Zelle lenken, wie dies in Figur 3 durch den Lichtstrahl 21 veranschaulicht ist. Die optischen Elemente 20 haben also die Aufgabe, einfallendes Licht an den Kanalräumen 18 vorbei in den Elektrolyten 13 und zum Halbleiterabsorber 11 zu lenken und somit für die solare Wasserspaltung nutzbar zu machen. Durch diese Maßnahme wird verhindert, dass ein Teil der auf der Oberfläche der Zelle eintreffenden Lichtenergie ungenutzt verloren geht. Mittels der optischen Elemente 20 wird erreicht, dass die gesamte auf der Oberfläche der Zelle eintreffende Lichtenergie zum Halbleiterabsorber 11 gelangt und somit für die solare Wasserspaltung genutzt werden kann. Dadurch wird der Wirkungsgrad der Zelle weiter gesteigert.

Die Wirkung der Gasableitung über die gekrümmten beziehungsweise geneigten Anlaufflächen 17 und die Kanalräume 18 kann durch eine geeignete Oberflächenbehandlung der Unterseite des transparenten Abdeckelements 14 noch verbessert werden. Hierzu werden die Bereiche der Unterseite des transparenten Abdeckelements 14, die mit dem Elektrolyten 13 in Kontakt stehen, einer hydrophilen Oberflächenbehandlung unterzogen beziehungsweise mit einer hydrophilen Beschichtung versehen. Dabei wird insbesondere die Anlauffläche 17, die als gekrümmte beziehungsweise geneigte Anlauffläche für die Wasserstoffbläschen 16 ausgebildet ist, mit einer hydrophilen Beschichtung versehen. Diese hydrophile Funktionalisierung fördert die Benetzung der Anlauffläche 17 mit dem Elektrolyten 13 und verhindert damit insbesondere ein Anhaften von auf der Anlauffläche auftreffenden Wasserstoffbläschen 16. Dagegen werden die Bereiche der Unterseite, die nicht mit dem Elektrolyten 13 in Kontakt stehen, also insbesondere die Innenwandung der Kanalräume 18, einer hydrophoben Oberflächenbehandlung unterzogen oder mit einer hydrophoben Beschichtung versehen, um eine Benetzung dieser Oberflächenbereiche mit Elektrolyt zu verhindern.

Bei einem aus Glas oder Quarzglas bestehenden Abdeckelement 14 können die hydrophilen Bereiche der Glas- beziehungsweise Quarzglasoberfläche beispielsweise durch eine Behandlung mit Sauerstoffplasma erzeugt werden. Hydrophobe Bereiche auf Glas oder Quarzglas werden mittels einer Silanisierung erzeugt, wobei als geeignetes Silan beispielsweise Dimethylchlorsilan eingesetzt werden kann. Wenn das transparente Abdeckelement 14 dagegen aus Kunststoff besteht, weisen die Oberflächenbereiche des Kunststoffs bereits hydrophobe Eigenschaften auf. Allerdings ist es möglich, festgelegte Bereiche wie beispielsweise die gekrümmte beziehungsweise geneigte Anlauffläche 17 durch Behandlung mit einem Sauerstoffplasma hydrophil zu machen. Insofern können auch bei Verwendung eines Kunststoffmaterials wie beispielsweise Cyclo-Olefin-Copolymeren die benötigten hydrophilen Oberflächenbereiche erzeugt werden.

Unterhalb der Kanalräume 18 sind in Figur 3 die ebenfalls in Längsrichtung verlaufenden Gegenelektroden 22 zu erkennen, die mit der rückwärtigen Elektrode des Halbleiterabsorbers 11 elektrisch verbunden sind. Die Gegenelektroden 22 sind jeweils von einer Membranröhrenstruktur 23 umgeben, die teilweise oberhalb und teilweise unterhalb der Elektrolytoberfläche 19 angeordnet ist. Oberhalb der Elektrolytoberfläche 19 wird die Membranröhrenstruktur 23 durch ein V-förmiges Formteil 24 gebildet, das sich in Längsrichtung erstreckt und einen nicht mit Elektrolyt befüllten freien Raum 25 umschließt, der für den Gasabtransport genutzt werden kann. Unterhalb der Elektrolytoberfläche 19 ist die Gegenelektrode 22 von einer protonenleitenden Membran 26 umgeben, die den Bereich um die Gegenelektrode 22 vom restlichen Elektrolyten trennt. Die Membran 26 ist an den beiden Seiten des V-förmigen Formteils 24 befestigt. Wenn auf den Halbleiterabsorber 11 Licht auftrifft, wird an den Gegenelektroden 22 Sauerstoff erzeugt, wobei die entstehenden Sauerstoffbläschen infolge des Auftriebs nach oben steigen, so dass sich der freie Raum 25 mit Sauerstoff füllt. Anschließend kann der entstandene Sauerstoff über den freien Raum 25 der Membranröhrenstruktur 23 abtransportiert werden.

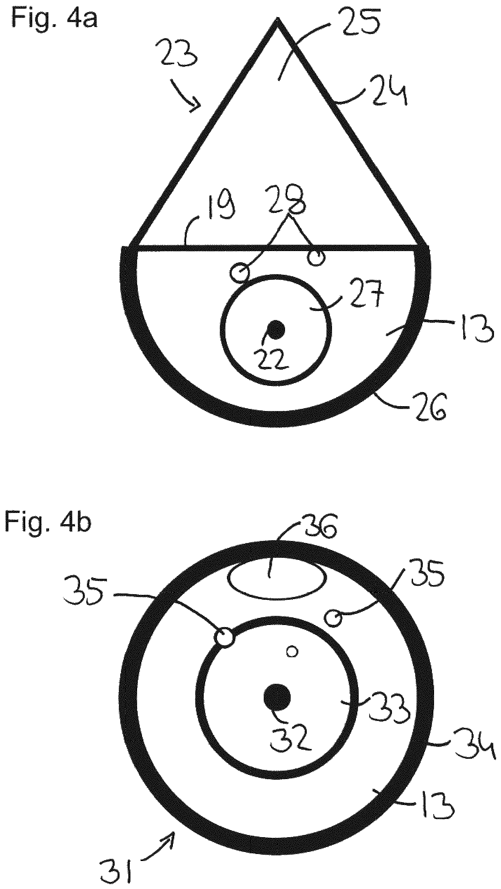

Die Membranröhrenstruktur 23 ist in Figur 4a nochmals vergrößert gezeigt. In Figur 4a ist die in Längsrichtung verlaufende Gegenelektrode 22 zu erkennen, die innerhalb des Elektrolyten 13 angeordnet ist. Die Gegenelektrode 22 ist von einem Katalysator 27 umgeben, beispielsweise von einem Katalysator auf der Basis von Rutheniumoxid oder Iridiumoxid. Oberhalb der Elektrolytoberfläche 19 wird die Membranröhrenstruktur 23 durch ein V-förmiges Formteil 24 gebildet, das einen oberhalb der Elektrolytoberfläche 19 befindlichen freien Raum 25 umschließt. Unterhalb der Elektrolytoberfläche 19 ist die Gegenelektrode 22 ringsum von der protonenleitenden Membran 26 umgeben. Die bei Lichteinfall an der Gegenelektrode 22 gebildeten Sauerstoffbläschen 28 steigen infolge des Auftriebs auf, so dass der freie Raum 25 mit Sauerstoff befüllt wird. Über den freien Raum 25 kann der entstandene Sauerstoff abtransportiert werden.

Vorzugsweise ist die Membranröhrenstruktur 23 über Verbindungsstege 29 am transparenten Abdeckelement 14 angebracht. Die Verwendung einer unmittelbar an der Elektrolytoberfläche 19 befindlichen und teilweise mit Elektrolyt befüllten Membranröhrenstruktur hat insbesondere den Vorteil, dass die Zelle kompakter ausgelegt werden kann. Die Höhe 30 des elektrolytbefüllten Bereichs wird verringert, was den Vorteil hat, dass das einfallende Licht durch den Elektrolyten 13 nur vergleichsweise wenig geschwächt wird. Darüber hinaus bietet die Anordnung der Membranröhrenstruktur 23 an der Elektrolytoberfläche 19 den Vorteil, dass ein freier Raum 25 für den Abtransport des entstehenden Sauerstoffs ausgebildet wird. Insgesamt erhält man bei der in Figur 3 gezeigten Zelle für die solare Wasserspaltung eine Struktur, bei der die beiden Gasabführungen für den Wasserstoff und den Sauerstoff unmittelbar übereinander angeordnet sind, so dass eine platzsparende Gasabführung ermöglicht wird. Darüber hinaus sind über den beiden Gasabführungen jeweils optische Elemente 20 vorgesehen, die auch das im Bereich der Gasabführungen eintreffende Licht zum Halbleiterabsorber 11 hin umlenken und somit nutzbar machen, so dass das gesamte einfallende Licht genutzt werden kann. Mittels der in Figur 3 gezeigten Struktur lässt sich durch die Verminderung der Gasblasen, die dadurch bewirkte Verringerung der Lichtstreuung im Elektrolyten sowie durch die verbesserte Nutzung des einfallenden Lichts insgesamt eine ca. 10-prozentige Verbesserung der Ausbeute erzielen.

Alternativ zu der in Figur 4a gezeigten Membranröhrenstruktur 23 können bei der in Figur 3 gezeigten Zelle allerdings auch Membranröhren eingesetzt werden, die vollständig unterhalb der Elektrolytoberfläche angeordnet sind. Eine derartige Membranröhre 31 ist in Figur 4b im Querschnitt gezeigt. Die unterhalb der Elektrolytoberfläche angebrachte Membranröhre 31 umfasst eine Gegenelektrode 32, die sich in Längsrichtung erstreckt und die von einem geeigneten Katalysator 33 umgeben ist. Die Gegenelektrode 32 ist von einer protonenleitenden Membran 34 umgeben, wobei die Membran 34 die Gegenelektrode 32 in Längsrichtung rundum umschließt. Wenn Licht auf dem Halbleiterabsorber 11 auftrifft, entstehen an der Gegenelektrode 32 Sauerstoffbläschen 35, die sich im oberen Bereich 36 der Membranröhre 31 sammeln. Über die Membranröhre 31 kann der gebildete Sauerstoff dann abtransportiert werden. Dabei ist es auch möglich, die Membranröhre 31 in Längsrichtung geneigt unterhalb der Elektrolytoberfläche anzuordnen, so dass der Abtransport des Gases durch die Schräglage der Membranröhre 31 begünstigt wird.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

1 Halbleiterabsorber
2 Elektrolyt
3 Pfeil
4 katalytisch aktive Schicht
5 rückwärtige Elektrode
6 ohmscher Kontakt
7 elektrische Leitung
8 Gegenelektrode
9 Membranröhre
10 transparentes Abdeckelement
11 Halbleiterabsorber
12 katalytisch aktive Schicht
13 Elektrolyt
14 transparentes Abdeckelement
15 Pfeil
16 Wasserstoffbläschen
17 Anlauffläche
18 Kanalraum
19 Elektrolytoberfläche
20 optisches Element
21 Lichtstrahl
22 Gegenelektrode
23 Membranröhrenstruktur
24 V-förmiges Formteil
25 freier Raum
26 Membran
27 Katalysator
28 Sauerstoffbläschen
29 Verbindungsstege
30 Höhe
31 Membranröhre
32 Gegenelektrode
33 Katalysator
34 Membran
35 Sauerstoffbläschen
36 oberer Bereich der Membranröhre

## Patentansprüche

1. Eine Zelle, welche aufweist
ein transparentes Abdeckelement (10,14), das an einer Oberseite der Zelle angeordnet ist,
einen unterhalb des Abdeckelements (10,14) angeordneten Innenraum, der teilweise mit einem Elektrolyten (2,13) befüllt ist,
einen Halbleiterabsorber (1, 11), der im oder am Elektrolyten (2,13) angeordnet ist,
eine oder mehrere Gegenelektroden (8, 22), die oberhalb des Halbleiterabsorbers (1, 11) im Elektrolyten (2, 13) angeordnet sind und mit einer an einer vom Abdeckelement (10,14) abgewandten Rückseite des Halbleiterabsorbers (1, 11) angeordneten rückwärtigen Elektrode (5) elektrisch verbunden sind,
eine oder mehrere Membranhüllen (9, 23, 31), wobei innerhalb einer Membranhülle (9, 23, 31) jeweils eine Gegenelektrode (8, 22) verläuft,
**dadurch gekennzeichnet, dass**
zwischen einer Elektrolytoberfläche (19) und einer Unterseite des Abdeckelements (10,14) ein oder mehrere Kanalräume (18) ausgebildet sind, die sich entlang von einem oder mehreren Teilbereichen der Unterseite des Abdeckelements (10,14) erstrecken und zum Abführen eines im Innenraum der Zelle gebildeten ersten Gases nutzbar sind,
wobei die Unterseite des Abdeckelements (10, 14) mindestens einen Bereich aufweist, an dem die Unterseite des Abdeckelements (10, 14) mit dem Elektrolyten (2, 13) in Kontakt steht, wobei zumindest ein Abschnitt dieses mindestens einen Bereichs eine Anlauffläche (17) für Gasblasen (16) bildet, welche dazu ausgelegt ist, die Gasblasen (16) entlang einer gekrümmten oder schräg geneigten Oberfläche zu einem benachbarten Kanalraum (18) zu leiten.

2. Eine Zelle gemäß Anspruch 1, **dadurch gekennzeichnet, dass** die Membranhüllen (9, 23, 31) als die Gegenelektroden (8, 22) umgebende Membranröhren ausgebildet sind.

3. Eine Zelle gemäß Anspruch 1 oder Anspruch 2, **dadurch gekennzeichnet, dass** die Zelle für eine lichtinduzierte Wasserspaltung ausgelegt ist.

4. Eine Zelle gemäß einem der Ansprüche 1 bis 3, **dadurch gekennzeichnet, dass** eine Gegenelektrode (8, 22) und eine die Gegenelektroden (8, 22) umgebende Membranhülle (9, 23, 31) jeweils unter einem zugeordneten Kanalraum (18) angeordnet ist.

5. Eine Zelle gemäß einem der Ansprüche 1 bis 4, **gekennzeichnet durch** mindestens eines von folgenden:
- an dem Abdeckelement (10,14) sind ein oder mehrere Verbindungsstege angebracht, mit denen die Gegenelektrode (8, 22) und die die Gegenelektrode (8, 22) umgebende Membranhülle (9, 23, 31) in einer Position unter einem zugeordneten Kanalraum (18) gehalten werden;
- die Kanalräume (18) sind über den Gegenelektroden (8, 22) und den die Gegenelektroden umgebenden Membranhüllen (9, 23, 31) angeordnet, so dass ein Lichteinfall durch das Abdeckelement (10,14) hindurch auf den Halbleiterabsorber (1, 11) geringstmöglich verschattet ist;
- von der Oberseite des Abdeckelements (10,14) aus betrachtet überdecken sich die Kanalräume (18), die Gegenelektroden (8, 22) und die diese umschließenden Membranhüllen (9, 23, 31) zumindest weitgehend.

6. Eine Zelle gemäß einem der Ansprüche 1 bis 5, **dadurch gekennzeichnet, dass** über die Membranhüllen (9, 23, 31) ein an den Gegenelektroden (8, 22) entstehendes zweites Gas abführbar ist.

7. Eine Zelle gemäß einem der Ansprüche 1 bis 6, **dadurch gekennzeichnet, dass** die Anlaufflächen (17) für Gasblasen (16) an der Unterseite des Abdeckelements (10,14) mit einer hydrophilen Beschichtung versehen oder mittels einer hydrophilierenden Oberflächenbehandlung modifiziert sind.

8. Eine Zelle gemäß einem der Ansprüche 1 bis 7, **gekennzeichnet durch** mindestens eines von folgenden:
- in oder an dem Abdeckelement (10,14) ist mindestens ein optisches Element (20) angeordnet, das dazu ausgelegt ist, einfallendes Licht an dem mindestens einen Kanalraum (18) vorbei zum Halbleiterabsorber (1, 11) zu lenken;
- an oder in dem Abdeckelement (10,14) ist mindestens ein optisches Element (20) angeordnet, das dazu ausgelegt ist, einfallendes Licht an einem jeweils darunter angeordneten Kanalraum (18) vorbei zum Halbleiterabsorber (1, 11) zu lenken;
- die mindestens eine Membranhülle (23) ist innerhalb der Zelle so angeordnet, dass nur ein Teil der Membranhülle (23) innerhalb des Elektrolyten (2, 13) angeordnet ist, wobei die Elektrolytoberfläche (19) durch die mindestens eine Membranhülle (23) hindurch verläuft.

9. Eine Zelle, welche aufweist
ein transparentes Abdeckelement (10,14), das an einer Oberseite der Zelle angeordnet ist,
einen unterhalb des Abdeckelements (10,14) angeordneten Innenraum, der teilweise mit einem Elektrolyten (2, 13) befüllt ist,
einen Halbleiterabsorber (1, 11), der im oder am Elektrolyten (2, 13) angeordnet ist,
eine oder mehrere Gegenelektroden (8, 22), die oberhalb des Halbleiterabsorbers (1, 11) im Elektrolyten (2, 13) angeordnet sind und mit einer an einer vom Abdeckelement (10,14) abgewandten Rückseite des Halbleiterabsorbers (1, 11) angeordneten rückwärtigen Elektrode (5) elektrisch verbunden sind,
eine oder mehrere Membranhüllen (23), wobei innerhalb einer Membranhülle (23) jeweils eine Gegenelektrode (22) verläuft,
**dadurch gekennzeichnet, dass**
die mindestens eine Membranhülle (23) innerhalb der Zelle so angeordnet ist, dass nur ein Teil der Membranhülle (23) innerhalb des Elektrolyten (13) angeordnet ist, wobei eine Elektrolytoberfläche (19) durch die mindestens eine Membranhülle (23) hindurch verläuft.

10. Eine Zelle gemäß Anspruch 9, **dadurch gekennzeichnet, dass** der oberhalb der Elektrolytoberfläche (19) angeordnete Bereich der Membranhülle (23) für eine Abführung eines an der innerhalb der Membranhülle (23) verlaufenden Gegenelektrode (22) gebildeten zweiten Gases nutzbar ist.

## Claims

1. A cell, comprising
a transparent cover element (10, 14) which is disposed on an upper side of the cell,
an interior space disposed below the cover element (10, 14), said interior space being partially filled with an electrolyte (2, 13),
a semiconductor absorber (1, 11) which is disposed in or on the electrolyte (2, 13),
one or more counter electrodes (8, 22) which are disposed above the semiconductor absorber (1, 11) in the electrolyte (2, 13) and electrically connected to a rear electrode (5) disposed on a rear side of the semiconductor absorber (1, 11) facing away from the cover element (10, 14),
one or more membrane shells (9, 23, 31), wherein a counter electrode (8, 22) extends inside each membrane shell (9, 23, 31),
**characterized in that**
between an electrolyte surface (19) and an underside of the cover element (10, 14) one or more duct spaces (18) are formed which extend along one or more partial areas of the underside of the cover element (10, 14) and can be used for discharging a first gas formed in the interior space of the cell,
wherein the underside of the cover element (10, 14) comprises at least one area where the underside of the cover element (10, 14) is in contact with the electrolyte (2, 13), wherein at least a portion of this at least one area forms a stop face (17) for gas bubbles (16) which is designed to guide the gas bubbles (16) along a curved or obliquely inclined surface to an adjacent duct space (18).

2. A cell according to claim 1, **characterized in that** the membrane shells (9, 23, 31) are designed as membrane tubes surrounding the counter electrodes (8, 22).

3. A cell according to claim 1 or claim 2, **characterized in that** the cell is designed for a light-induced water splitting.

4. A cell according to one of the claims 1 to 3, **characterized in that** a counter electrode (8, 22) and a membrane shell (9, 23, 31) surrounding the counter electrodes (8, 22) are each disposed under an associated duct space (18).

5. A cell according to one of the claims 1 to 4, **characterized by** at least one of the following:
- attached to the cover element (10, 14) are one or more connecting webs with which the counter electrode (8, 22) and the membrane shell (9, 23, 31) surrounding the counter electrode (8, 22) is held in a position under an associated duct space (18);
- the duct spaces (18) are disposed above the counter electrodes (8, 22) and the membrane shells (9, 23, 31) surrounding the counter electrodes, so that a light incidence through the cover element (10, 14) onto the semiconductor absorber (1, 11) is shaded to a minimum;
- viewed from the upper side of the cover element (10, 14), the duct spaces (18), the counter-electrodes (8, 22) and the membrane shells (9, 23, 31) surrounding them overlap at least to a large extent.

6. A cell according to one of the claims 1 to 5, **characterized in that** a second gas generated on the counter electrodes (8, 22) can be discharged via the membrane shells (9, 23, 31).

7. A cell according to one of the claims 1 to 6, **characterized in that** the stop faces (17) for gas bubbles (16) are provided on the underside of the cover element (10, 14) with a hydrophilic coating or modified by a hydrophilizing surface treatment.

8. A cell according to one of the claims 1 to 7, **characterized by** at least one of the following:
- in or on the cover element (10, 14) is disposed at least one optical element (20), which is designed to direct incident light past the at least one duct space (18) to the semiconductor absorber (1, 11);
- on or in the cover element (10, 14) is disposed at least one optical element (20), which is designed to direct incident light past a respective duct space (18) arranged thereunder to the semiconductor absorber (1, 11);
- the at least one membrane shell (23) is disposed inside the cell in such a way that only one part of the membrane shell (23) is disposed inside the electrolyte (2, 13), wherein the electrolyte surface (19) extends through the at least one membrane shell (23).

9. A cell, comprising
a transparent cover element (10, 14) which is disposed on an upper side of the cell,
an interior space disposed below the cover element (10, 14), said interior space being partially filled with an electrolyte (2, 13),
a semiconductor absorber (1, 11) which is disposed in or on the electrolyte (2, 13),
one or more counter electrodes (8, 22) which are disposed above the semiconductor absorber (1, 11) in the electrolyte (2, 13) and electrically connected to a rear electrode (5) disposed on a rear side of the semiconductor absorber (1, 11) facing away from the cover element (10, 14),
one or more membrane shells (23), wherein a counter electrode (22) extends inside each membrane shell (23),
**characterized in that**
the at least one membrane shell (23) is disposed inside the cell in such a way that only one part of the membrane shell (23) is disposed inside the electrolyte (13), wherein an electrolyte surface (19) extends through the at least one membrane shell (23).

10. A cell according to claim 9, **characterized in that** the area of the membrane shell (23) disposed above the electrolyte surface (19) can be used for discharging a second gas formed on the counter electrode (22) extending inside the membrane shell (23).

## Revendications

1. Une cellule, comprenant
un élément de recouvrement transparent (10, 14) qui est disposé sur la face supérieure de la cellule,
un espace intérieur disposé en dessous de l'élément de recouvrement (10, 14), ledit espace étant rempli partiellement d'un électrolyte (2, 13),
un absorbeur à semi-conducteur (1, 11) qui est disposé dans ou sur l'électrolyte (2, 13),
une ou plusieurs contre-électrodes (8, 22) qui sont disposées au-dessus de l'absorbeur à semi-conducteur (1, 11) dans l'électrolyte (2, 13) et connectées électriquement à une électrode arrière (5) disposée sur une face arrière de l'absorbeur à semi-conducteur (1, 11) orientée à l'opposé de l'élément de recouvrement (10, 14),
une ou plusieurs enveloppes à membrane (9, 23, 31), une contre-électrode (8, 22) s'étendant à l'intérieur de chaque enveloppe à membrane (9, 23, 31),
**caractérisée en ce que**
entre une surface de l'électrolyte (19) et une face inférieure de l'élément de recouvrement (10, 14) sont réalisées une ou plusieurs chambres de conduite (18), qui s'étendent tout le long d'une ou plusieurs sections partielles de la face inférieure de l'élément de recouvrement (10, 14) et qui peuvent être utilisées pour évacuer un premier gaz formé à l'intérieur de la cellule,
la face inférieure de l'élément de recouvrement (10, 14) comprenant au moins une zone où la face inférieure de l'élément de recouvrement (10, 14) est en contact avec l'électrolyte (2, 13), au moins une portion de cette zone, au moins au nombre d'une, formant une surface d'arrêt (17) pour des bulles de gaz (16) qui est conçue pour acheminer les bulles de gaz (16) tout le long d'une surface incurvée ou inclinée obliquement vers une chambre de conduite (18) adjacente.

2. Une cellule selon la revendication 1, **caractérisée en ce que** les enveloppes à membrane (9, 23, 31) sont conçues en tant que tubes à membrane entourant les contre-électrodes (8, 22).

3. Une cellule selon la revendication 1 ou la revendication 2, **caractérisée en ce que** la cellule est conçue pour une dissociation de l'eau induite par la lumière.

4. Une cellule selon l'une des revendications 1 à 3, **caractérisée en ce qu'**une contre-électrode (8, 22) et une enveloppe à membrane (9, 23, 31) entourant les contre-électrodes (8, 22) sont respectivement disposées sous une chambre de conduite (18) associée.

5. Une cellule selon l'une des revendications 1 à 4, **caractérisée par** au moins l'un des éléments suivants :
- une ou plusieurs nervures de liaison sont montées sur l'élément de recouvrement (10, 14) avec lesquelles la contre-électrode (8, 22) et l'enveloppe à membrane (9, 23, 31) entourant la contre-électrode (8, 22) sont maintenues dans une position située sous une chambre de conduite (18) associée ;
- les chambres de conduite (18) sont disposées au-dessus des contre-électrodes (8, 22) et des enveloppes à membrane (9, 23, 31) entourant les contre-électrodes de sorte qu'une incidence de la lumière à travers l'élément de recouvrement (10, 14) sur l'absorbeur à semi-conducteur (1, 11) soit ombrée le moins possible ;
- vues de la face supérieure de l'élément de recouvrement (10, 14) les chambres de conduite (18), les contre-électrodes (8, 22) et les enveloppes à membrane (9, 23, 31) entourant ces contre-électrodes se chevauchent au moins sensiblement.

6. Une cellule selon l'une des revendications 1 à 5, **caractérisée en ce qu'**un second gaz généré au niveau des contre-électrodes (8, 22) peut être déchargé à travers les enveloppes à membrane (9, 23, 31).

7. Une cellule selon l'une des revendications 1 à 6, **caractérisée en ce que** les surfaces d'arrêt (17) pour les bulles de gaz (16) sont munies sur la face inférieure de l'élément de recouvrement (10, 14) d'un revêtement hydrophile ou modifiées au moyen d'un traitement de surface hydrophilisant.

8. Une cellule selon l'une des revendications 1 à 7, **caractérisée par** au moins l'un des éléments suivants :
- dans ou sur l'élément de recouvrement (10, 14) est disposé au moins un élément optique (20) qui est conçu pour diriger la lumière incidente au-delà de la chambre de conduite (18), au moins au nombre d'une, vers l'absorbeur à semi-conducteur (1, 11) ;
- sur ou dans l'élément de recouvrement (10, 14) est disposé au moins un élément optique (20) qui est conçu pour diriger la lumière incidente au-delà d'une chambre de conduite respective (18) disposée en dessous de celui-ci vers l'absorbeur à semi-conducteur (1, 11) ;
- l'enveloppe à membrane (23), au moins au nombre d'une, est disposée à l'intérieur de la cellule de manière à ce que seulement une partie de l'enveloppe à membrane (23) soit disposée à l'intérieur de l'électrolyte (2, 13), la surface de l'électrolyte (19) passant à travers l'enveloppe à membrane (23), au moins au nombre d'une.

9. Une cellule, comprenant
un élément de recouvrement transparent (10, 14) qui est disposé sur la face supérieure de la cellule,
un espace intérieur disposé en dessous de l'élément de recouvrement (10, 14), ledit espace étant rempli partiellement d'un électrolyte (2, 13),
un absorbeur à semi-conducteur (1, 11) qui est disposé dans ou sur l'électrolyte (2, 13),
une ou plusieurs contre-électrodes (8, 22) qui sont disposées au-dessus de l'absorbeur à semi-conducteur (1, 11) dans l'électrolyte (2, 13) et connectées électriquement à une électrode arrière (5) disposée sur une face arrière de l'absorbeur à semi-conducteur (1, 11) orientée à l'opposé de l'élément de recouvrement (10, 14),
une ou plusieurs enveloppes à membrane (23), une contre-électrode (22) s'étendant à l'intérieur de chaque enveloppe à membrane (23),
**caractérisée en ce que**
l'enveloppe à membrane (23), au moins au nombre d'une, est disposée à l'intérieur de la cellule de manière à ce que seulement une partie de l'enveloppe à membrane (23) soit disposée à l'intérieur de l'électrolyte (13), une surface de l'électrolyte (19) passant à travers l'enveloppe à membrane (23), au moins au nombre d'une.

10. Une cellule selon la revendication 9, **caractérisée en ce que** la zone de l'enveloppe à membrane (23) disposée au-dessus de la surface de l'électrolyte (19) peut être utilisée pour évacuer un second gaz formé au niveau de la contre-électrode (22) s'étendant à l'intérieur de l'enveloppe à membrane (23).
